# EUROPEAN PATENT SPECIFICATION

(11) **EP 3 025 453 B1**
(45) Date of publication and mention of the grant of the patent: **04.12.2019**
(21) Application number: 14744824.5
(22) Date of filing: 25.07.2014
(51) Int. Cl.: H04L 12/24, H04L 12/26, H04L 12/725, H04L 12/741

(54) **PROBE ROUTING IN A NETWORK**
ROUTEN EINER SONDE IN EINEM NETZWERK
ROUTAGE DE SONDE DANS UN RÉSEAU

(30) Priority: 26.07.2013 EP 13178219
(43) Date of publication of application: 01.06.2016
(73) Proprietor: Koninklijke KPN N.V., 3072 AP Rotterdam (NL); Nederlandse Organisatie voor toegepast- natuurwetenschappelijk onderzoek TNO, 2595 DA 's-Gravenhage (NL)
(72) Inventor: STOKKING, Hans, Maarten, NL-2292 CH Wateringen (NL); DEN HARTOG, Frank T. H., Melba, ACT 2615 (AU); HERRERA VAN DER NOOD, Manuel, NL-3225 GL Hellevoetsluis (NL)
(74) Representative: Wuyts, Koenraad Maria
(86) International application number: PCT/EP2014/066083
(87) International publication number: WO 2015/011278

(56) References cited:
- US-A1- 2009 198 832
- US-A1- 2012 287 791

## Description

The invention concerns a method of probing a network between a probe node and a destination node, wherein the network comprises a further node and further comprises a connection between the probe node and the destination node, a connection between the probe node and the further node and a connection between the further node and the destination node. The method also relates to a network.

### Background to the Invention

Probing a network is typically performed to identify or quantify facts about the network, for example available bandwidth and capacity in parts of the network, network topology and other network characteristics such as whether ports are open or closed or whether certain functions are enabled at nodes within the network.

Network probing can be performed both actively and passively. In active probing an element connected to the network actively sends out probe packets on the network, and another element in the network receives these probes. Sometimes probes are sent round-trip within the network. Here the probing network element sends probes to other network elements and receives replies which are typically automated. In passive probing no probe packets are actively sent and instead the probing node monitors, in other words passively listens in on, existing network traffic to derive information. Hybrids methods are also possibly in which both active and passive methods are combined. Typically hybrid probing methods use existing traffic but influence that traffic in some way.

Further methods of probing include receiver-only based probing methods, a form of passive probing in which the sending of traffic is not controlled, sender-only based probing and 'sender + receiver' based probing methods. The latter two forms of probing can either be active or passive. Further there are en-route probes, which involve a monitoring module on a network element, there are probing methods that use end-to-end probes and there are probing methods that can remotely probe links that are inside the network, also known as per-hop probing.

Information revealed by probing is typically limited by the method used. For example methods of bandwidth probing might typically only reveal the bandwidth of the bottleneck link and even then only on the existing paths available in the network. Current probing methods can only probe nodes and connection which are on networks paths between a probing node and some other reachable node because not all nodes are situated on an existing probe pathway as defined by the traffic flow in the network. In any case not all nodes are available as a starting point from which to launch an active probe. For example in a home or domestic network an operator can install probing software on the home gateway and perhaps a proprietary TV set top box, but an operator cannot necessarily install probing software on the user's own PC or game box, XBOX or other similar device. Therefore even though the operator may be supplying a gateway device through which the network communicates with the wider internet, the operator may not be able to derive accurate information about devices on the network which pose difficulties or otherwise affect the network.

Solutions exist for detecting the capacity or bandwidth on a specific link and are typically of two forms. One form makes use of the Time To Live (TTL) field of IP packets which is typically used to monitor the number of times a packet is forwarded before reaching a certain destination. Each time the packet is forwarded by a router a value of 1 is typically subtracted from the current TTL value by the router. When the TTL value reduces to zero the packet can no longer be forwarded and this ensures that packets will not be forever forwarded, thereby nullifying any cyclic routes which may have arisen in a network. In practice, the router that reduces the TTL value to zero also sends an ICMP reply TTL exceeded' and by carefully choosing the probe TTL value this reply can be incorporated into a probing mechanism. Another form of bandwidth probing makes use of cross-correlations of the probes of different paths to find out where certain paths coincide. However this method cannot be used to measure all links, typically due to probing limitations as mentioned earlier.

These known solutions are not applicable to all networks and in particular they are less applicable to a network typically found in a home or domestic situation. The TTL-based approach is not applicable because a typical home network has many layer 2, e.g. Ethernet, hops, but no layer 3, e.g. IP, hops. Thus, since a switch will not subtract 1 from the TTL value and will not sent ICMP TTL exceeded' messages, the TTL approach is typically meaningless in a home network. Also, the cross-correlation method is not useful because the home network is typically a tree topology whereas the cross-correlation probing method requires different routes to go through the link being investigated.

'Efficiently Monitoring Bandwidth and Latency in IP Networks', Yuri Breitbart et al, INFOCOM 2001, Twentieth Annual Joint Conference of the IEEE Computer and Communications Societies, Vol. 2, 2001, pp. 933-942, describes a method of probing a network using source routing and IP encapsulation in which probe packets are encoded with a pre-defined route, typically stipulating a sequence of nodes as the route in a network, and sent out into the network which is to be probed. Both source routing and IP encapsulation require packet processing at the nodes which must be preprogrammed with the relevant functionality for either source routing or IP encapsulation. The packet processing which occurs at any node introduces an unknown time delay and therefore the results of the probing method are inaccurate. Additionally, the probe method using IP encapsulation suffers a further inaccuracy because as the IP data packets are unrolled at each node to strip out the top IP header for transfer into the header of the new outgoing packet, the size of the overall IP packet reduces and this produces an inaccuracy because while network probing results are based on packet size, this method results in a variable packet size over the entire route.

US 2012/287791 A1 discloses how load balancing is performed in a network using flow-based routing. For example, upon detection of a big flow, one or more alternative paths from a source host to a destination host in the network may be discovered by probing the network and generating, for each of the one or more alternative paths, an association of the packet header information of the big flow to an alternative path discovered using results of probing the network. Upon congestion in a path currently being used by the big flow, an alternative path that is not congested is selected from the one or more discovered alternative paths. The packet header information of the big flow is altered using the generated association of the packet header information to the selected alternative path such that the big flow will be transmitted using the selected alternative path.

US 2009/198832 A1 describes that a network device (e.g., a master controller) may detect an event on a current path in a computer network from a local network domain to a destination address prefix of a remote domain. In response, the device may dynamically (e.g., intelligently) determine a trace target destination address within the destination address prefix, and may perform (or request performance of) a Traceroute of the current path and a selection of alternate paths in the network from the local network domain to the trace target, where the Traceroute is adapted to obtain per-hop measurements along the respective traced path. The measurements may then be stored, for example, to be used for optimal path selection, fault identification reporting, etc..

It is a problem to accurately probe a network.

### Summary of the invention

The invention is as described in the claims.

A method of probing a network is described, in which the network is probed between a probe node and a destination node and in which the network comprises a further node and further comprises a connection between the probe node and the destination node, a connection between the probe node and the further node and a connection between the further node and the destination node.

By node is meant a network element able to send and receive packets and possibly forward packets. Typical examples of nodes are a home gateway, a router, a computer, a tablet, a set top box, a wireless camera etc. By connection is meant a link or collection of links or some form of coupling, for example electronically, according to known methods, or wirelessly, according to known methods, that connects nodes into a network and enables packets to travel over the connection or connections between the nodes. The probe node is a node arranged to perform probing, in other words send out an original probe packet. Typically the probe node contains, comprises or has access to dedicated software or programming which allows it to perform and manage probing in a network. The method includes selecting at least one node to be a redirecting node, which redirecting node comprises routing rules, and bypassing the routing rules by accessing further routing rules, selecting at least one node to be a forwarding node and ensuring packet forwarding at the forwarding node, and transmitting a probe packet between the probe node and the destination node.

This ensures that the probe packet can be sent around a route in a network while minimising delays caused by processing at the nodes because it allows a probe packet to probe a network over a route which is managed at the nodes. The route is managed by the provision of alternative routing rules at a node so that it directs probe packets which are intended to be delivered from an origin to a destination so that they first travel via an alternative node in the network, as indicated by the further or alternative routing rules, and not via the route which the network would normally support or use. In this way the method allows the probing of routes and/or links in a network which could not hitherto be probed. The node which performs the rerouting is referred to as a redirecting node. The action of using different routing rules to the rules normally used as a default in the redirecting node ensures that a different decision can be taken as to which route the probe packet is sent over.

Since no routing rules are changed on the probe node this has the advantage of not interfering with other, regular and non-probing data traffic on the network. This is particularly advantageous when the probe node is a gateway device on a home network. Gateway devices handle considerable traffic and running the invention from a gateway has the extra advantage that the network can be run effectively while links, that may not be directly accessible from the gateway, are probed, but without any probing traffic interfering with the routes of normal traffic to and from the gateway.

The invention allows a probe packet to be sent from a probe node to a destination node, or vice versa, via an alternative node, or further node. The alternative node receives the packet from the probe node and forwards it to a destination node. Alternatively it receives a packet from the destination node and forwards it to the probe node. In particular the alternative, or further, node does not have to lie on a direct route between the probe node and the destination node. In other words the probe packet is not constrained to travel between the probe node to the destination node via a direct link or connection between the probe and destination node, but rather can travel via a longer, circuitous route, in the network. This allows the possibility of probing routes, connections or links which might not otherwise be capable of being probed. Typically in a network traffic rules and communication protocols are set up to ensure packets are transported between nodes by the most efficient route. When probing existing networks under existing probing methods the traffic rules and communication protocols force probe packets to use the existing routes between nodes and this can limit the information which a probing method can derive. Changing the routing rules at a node and ensuring packet forwarding at another node allows the network to be probed by different routes and this can result in the probing of links in routes that were hitherto not available to be probed in that network.

The method has the further advantage that network links which are not on a direct path between the probe node and a destination node can be probed.

In a further advantage the method can be used in a small network, for example a home or domestic network, which is unlikely to include Source routing or IP encapsulation functionality in the nodes.

In such a small or domestic network the probe node will typically be a home gateway or residential gateway.

In a typical embodiment the further routing rules cause the probe packet to travel between the probe node and the destination node via the forwarding node.

There are several embodiments in which further routing rules can be provided which allow the normal, or default, routing rules at a node, the redirecting node, to be bypassed.

The probing application can use a direct interface connection and have a routing table built-in. A direct interface connection means having a direct connection to the network interface, bypassing the, default, routing functionality provided by the system, i.e. the node, on which the application runs. This allows a program to construct its own packets, while still being able to receive packets through the system as normal. Alternatively a second IP address can be supplied to the system, allowing the probing application to use a different IP address from the rest of the system. This can be done by using a virtual network interface bridged with the physical network interface, using for example TUN or TAP functions. Another option is to have a virtual machine using bridge mode to allow it to have its own IP address and running the probing application inside the virtual machine. Further options for binding a probing application to a different IP address than the system on which it is running include using advanced configuration in iptables, setting up an IP proxy on the system or using specialised software for binding the probing application to this different IP address.

Therefore in an advantageous embodiment the further routing rules are in a further routing table.

In particular, the routing table may be incorporated into the probe software itself. The transmission of the probe packet is typically controlled by probe software and in this embodiment the routing rules are part of the probe software and the software, in this case, would be programmed to access its own routing table rather than the routing table of the node from which it operates. In an advantageous embodiment the further routing tables are installed along with the probe software in the probe node, however they can also be added later, after probe software installation, and this would provide the advantage that new and additional probe routes can be downloaded to installed probe software. These new and additional probe routes could, for example, take into consideration new knowledge obtained about the network under consideration as a result of the new probing method.

In a further advantageous embodiment the probe software comprises its own IP address. This provides a particularly efficient way of providing the invention because separate routing rules, for example in an additional routing table, can be easily allocated to a separate IP address. In other words this embodiment provides a particularly efficient manner in which the probe software can be arranged to have its own routing table.

In a further embodiment multiple IP addresses, i.e. at least one additional IP addresses besides the regular IP address, are assigned to the nodes involved to prevent interference of a probing routing rule with regular data traffic. One or more of these additional IP addresses can then be used for probing, without interfering with the routes of the normal traffic.

In an alternative embodiment the probe software runs in a virtual machine on the probe node. Typically the virtual machine comprises its own IP address and its own routing rules. In alternative embodiments the probe software might be set up to run as a virtual machine on a node, in which case the routing rules to be used by the software are provided as the routing rules of the virtual machine, or, the probe software can be installed into an existing virtual machine run on a node. In the latter case the probe software can advantageously use any routing table already provided in the already existing virtual machine.

In a further advantageous embodiment an additional routing table is added to the routing table in the probe node. In this embodiment a further routing table is added as an adjunct to an existing routing table, or is added as an additional stand-alone table. In both cases the probe software is programmed to access the additional routing information.

There are two major embodiments of the working of the invention.

In the first embodiment the probe node is selected to be the redirecting node and the further node is selected to be the forwarding node.

This embodiment allows a probe packet to be sent from an outgoing node, the probe node, to a destination node via another, further, node in the network. The further node is the forwarding node. In this embodiment an outgoing probe packet, in other words a probe packet which starts at the probe node, is sent out into the network and via a non-direct route to the destination node.

In this embodiment the destination node may send the probe packet back to the probe node either directly or also indirectly via the further node.

In the second embodiment the destination node is selecting to be the redirecting node and the further node is selected to be the forwarding node.

This embodiment allows a probe packet to be sent directly to the destination node via the shortest possible route. This is how a probe packet would normally be transmitted to a destination probe. However in this embodiment the destination probe transmits the probe packet back to the probe node via the further node and in this return journey through the network the probe packets travels on a non-direct route between the destination node and the probe node.

Typically when using the method of the invention the routing rules are bypassed at the redirecting node so that a probe packet is routed to the forwarding node. This allows a probe packet to be routed to the forwarding node before it is routed on, or transmitted on, to any other node, for example the node to which it is ultimately to be delivered.

In an advantageous embodiment the packet forwarding is IP forwarding and this allows the invention to be used in an IP network. In an IP network the method can be advantageously applied by bypassing the existing routing rules at the redirecting node and accessing further routing rules which ensure that the IP address of the destination node is used as the destination IP address of the probe packet and the MAC address of the forwarding node is used as the destination MAC address of the probe packet. This allows the probe packets to be rerouted.

Advantageously in an IP network, the additional routing rules which are accessed allow for the changing of the Gateway entries for at least the probing traffic for certain destinations in the IP routing table in the redirecting node.

Enabling IP forwarding requires administrative access to the node, which would not normally be done in a large network, for example one in which source routing and IP encapsulation would be possible or appropriate. However IP forwarding is achievable in a smaller network, for example a home network, and this makes the invention particularly advantageous for probing a home or domestic network.

Ensuring packet forwarding in an IP network can be achieved by probing the network first in a conventional manner to ascertain if IP forwarding is turned on at a node which is selected to be a forwarding node. If forwarding is not already enabled it can be enabled by changing the settings on the node selected to be a forwarding node. These can be changed manually by the user, a tool can be provided which when run by the user changes the settings automatically or these settings can be changed using remote management, for example by using the DHCP ip-forwarding option which is understood in the art as being code 19 from RFC 2132, and which can be set to 1, which as the skilled person will understand sets IP forwarding to 'enabled'. As is known by the skilled person, DHCP is a specific client server management protocol which can be used in a home gateway, the home gateway playing the role of DHCP server. The other nodes in the network can then be managed as DHCP clients by the home gateway. A particular advantage of using DHCP is that the home gateway can turn the IP forwarding in a client node on and off. This allows setting up of alternative routes specifically for probing the network, and removing them or cancelling them afterwards by restoring the original IP forwarding setting at nodes.

Other nodes could also perform the role of DHCP server, for example a router or wireless router in the network. Alternatively, a computer or other node in the network could also undertake the role of DHCP server.

The method can be advantageously performed in a network comprising at least first, second and third nodes. Here the first node is a probe node, the second node is a further node, and the third node is a destination node, and there is a connection between the first node and the second node, and between the first node and the third node, and between the second node and the third node. Typically at least one node is selected to be a redirecting node and the routing rules are bypassed at the redirecting node by accessing further routing rules. At least one node is selected to be a forwarding node and packet forwarding is ensured at the forwarding node. The network is arranged to transmit a probe packet between the probe node and the destination node.

When the invention is performed in a home or residential network it is particularly advantageous if the probe node is a gateway device or residential gateway, arranged to connect the network to another or wider network, such as the internet. One method by which this can be done is by having a direct socket connection for the probing software on the home gateway and thus having the packet formed entirely by the probing software.

Further embodiments are shown in the Figures.

### Brief description of the drawings

Figure 1 shows a problem in network probing which is solved by the invention.
Figure 2 shows an embodiment of the invention.
Figure 3 shows further embodiments of the invention.
Figure 4 shows an embodiment of the invention.
Figure 5 shows an embodiment of the invention.
Figure 6 shows an embodiment of the invention.

### Detailed description

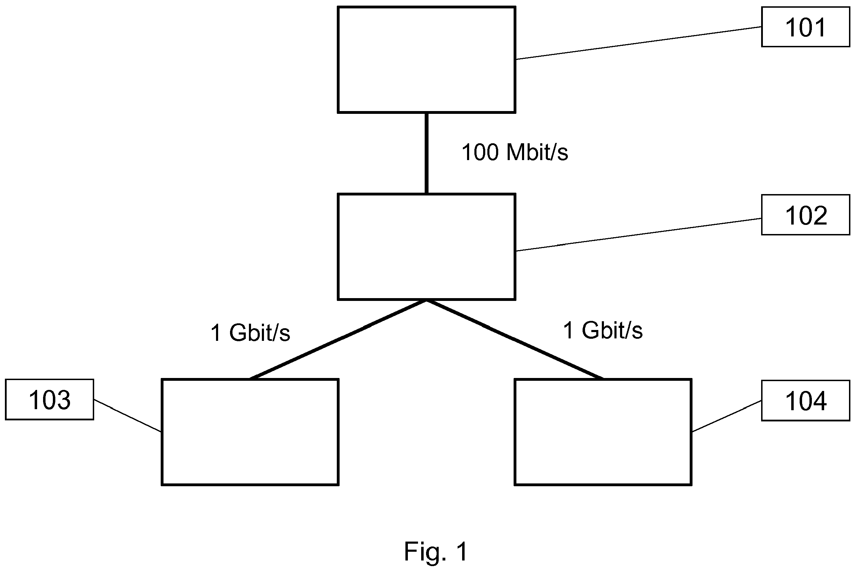

Figure 1 shows a problem in network probing which is solved by the invention. The problem is that of how to probe a specific network route or a part of a specific route, sometimes known as a 'hop', when the entity performing the probing does not have access to any of the devices on that route. In this sense the lack of access means not being able to install probing and/or monitoring software on all the devices or on specific relevant devices on that route. The lack of access means the entity has no way of probing the specific route, let alone a hop on the route.

A very simple, and typical, network configuration is shown in which a home gateway 101 is connected to a switch 102 which is itself connected to two devices 103 and 104. Device A, 103, and device B, 104, are both end devices in this particular network. The switch 102 could also be any other network node for example a router, a wireless router, etc. The home gateway 101 is a boundary device on the edge of the network offering a link to the wider, outside internet, for example, and as such an operator can typically install software on the home gateway but not on the switch or the devices in the home. Therefore the routes in the network which are available from probing from the home gateway 101 are the route between the home gateway 101 and device A 103, and the route between the home gateway 101 and device B 104. However, the route between device A 103 and device B 104 cannot be probed from the home gateway.

While it might theoretically be possible to install probe software on, for example, device A 103 which can then probe the route between device A 103 and device B 104, in practice this requires specialist knowledge which the home owner or other owner or user of a home or domestic network might not have.

However, the home gateway 101 has a 100 Mbit/s port to the switch 102, but the switch is actually a 1 Gbit/s switch meaning that the hop between the switch 102 and either device A 103 or device B 104 can carry data at a rate of 1 Gbit/s. But since probing methods are typically limited by the bottleneck link in a probed pathway, in other words the link with the least bandwidth or the largest delay, probing performed from the home gateway 101 can identify the bottleneck of 100 Mbit/s in the route from the home gateway 101 to device A and find the same bottleneck of 100 Mbit/s in the route from the home gateway 101 to device B. However, hence, probing performed from the home gateway 101 will not identify or find out that the switch 102 is capable of gigabit networking. This is important because data sent from device A 103 to device B 104, or vice versa, can actually be theoretically transmitted at the rate of 1 Gbit/s and knowledge of this can be used in the home gateway 101 to impact decisions taken on how much data the network can handle.

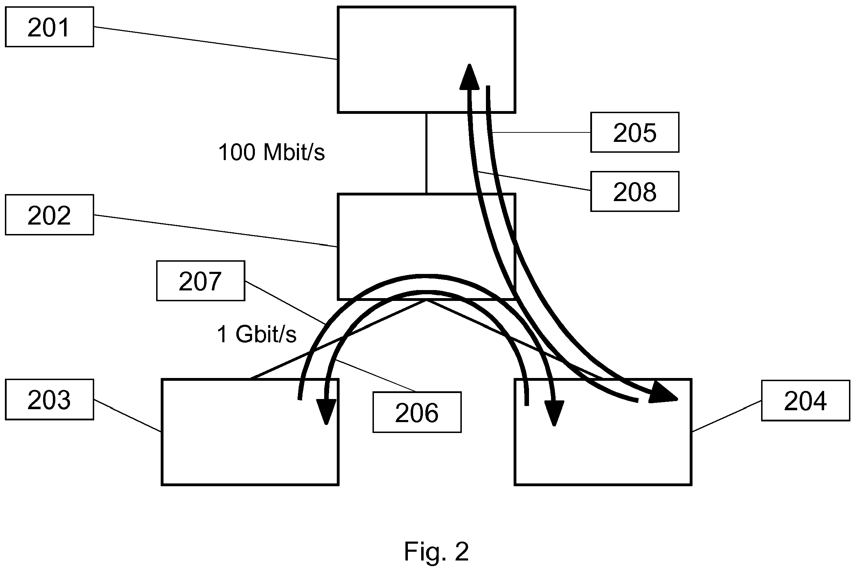

Figure 2 shows an embodiment of the invention which offers a solution to the problem. Residential, or home, gateway 201 is coupled to switch 202 via a connection with a 100Mbit/s capacity and switch 202, which has a capacity of 1 GBit/s passes traffic through to both device A 203 and device B 204. Device A 203 and device B 204 can also send traffic or data to each other through switch 202. Because device A 203 and device B 204 communicate via switch 202 they can pass data to each other at a rate of 1 GBit/s.

In performing a probe the home gateway 201 sends out 205 a probe packet onto the network with final destination device A 203. However it sends the probe packet to device B 204 first. The first decision in the route taken by the probe packet is taken at the switch 202 which receives the packets and then places it back out on the network on a route to device B 204. Device B 204 will receive the probe packet and route it 206 to device A 203. Device A 203 will reply to the probe packet, sending a reply packet with the home gateway 201 as the destination. However, device A 203 will send the reply first 207 to device B 204. Device B 204 will route the packet 208 to the home gateway 201.

In this example the method is used twice, firstly when the probe is sent out from the home gateway 201 with device A 203 as final destination, and then again when a reply probe is sent out from device A 203 with the home gateway 201 as final destination.

To accomplish this a number of measures can typically be taken. The specific measures may depend on the form of routing undertaken in the network but if the network is an IP network the following can be performed.

In order to transmit the probe packet to its destination but via an alternative node 205 the home gateway transmits a probe packet which has a destination IP address of device A 203 but a destination MAC address of device B 204. This can be done by making the IP address of device B the gateway for destination IP address of device A, thus changing the default route for packets going from the home gateway to device A.

In order to transmit the probe packet 206 further from device B to device A IP forwarding must be enabled at device B.

For example, in Windows XP PCs enabling IP forwarding can be achieved using a registry setting, for example the following setting may be appropriate:
(HKEY_LOCAL_MACHINE\SYSTEM\CurrentControlSet\Services\Tcpip\Parameters\IPEnableRouter= 1)

On Linux enabling IP forwarding can be achieved by setting the net.ipv4.ip_forward parameter, or on Windows by enabling Internet Connection Sharing. In most home networks these parameters are disabled by default. Besides enabling forwarding, the firewall settings also should allow any of the forwarded probes or their replies. Normally, a firewall will have different settings for ingress traffic, egress traffic and forwarding traffic. It is quite usual to have forwarding traffic allowed as a default setting.

In order to send back the probe packet reply 207 device A sends a packet with a destination IP address of the home gateway to the MAC address of device B. This is similar to step 205, however in the cases when it is not possible to install software with special socket access on device A it is possible as a viable alternative to set a routing rule on device A for destination IP address of the home gateway using device B as its gateway. In an advantageous embodiment this can be achieved by a node, for example the home gateway 201, operating as a DHCP server. As a DHCP server it can change the routing rules at device A 203 using RFC 3442.

In order to transmit the probe packet further 208 from device B to the home gateway no alterations to the way of working described for step 206 are necessary.

In the method the actual probe method used can advantageously be a per-hop probing method with a TTL-approach, and this is used to measure capacity on the links probed. In the example described per-hop probing will show that the 'hop' between device B and device A has substantially a 1 Gbit/s capacity. The method used therefore provides more information than existing probing methods.

The method described creates a new route for packets to be navigated through the network and has the advantage that it enables routing on one or more end-points, for example, in the case described above, a first end point device B 204 and a second end point device A 203. Therefore while the method may advantageously use a TTL-based approach to probe links it may in fact use most probing methods. For example these further probing techniques could use cross-correlation methods or use other probing methods to first probe a direct route towards a first device and then probe the indirect route to a second device via the first device, and deduce probing results for the connection between the first device and the second device from these two probes. Advantageously, the method allows for the possibility of different routes to be probed within a single network, even when probing software is not distributed throughout the network. In fact all kinds of routes between various devices in the home network can be probed using the method while maintaining probing software on only a single node, for example on the home gateway.

The method is particularly advantageous in home networks because most nodes or end points in a home network include the possibility for IP forwarding and typically the probing node merely needs to check or ensure that IP forwarding is in fact enabled for the method to be successfully used.

A further advantage of the method is that it is inherently secure for the endpoints, for example the forwarding node, as no ingress firewall rule is needed on the endpoint. Just forwarding traffic can never compromise the endpoint, at least while assuming no inherent vulnerability in the IP stack used for forwarding the packets. This is a deep advantage of the method because, unlike in probing methods using IP encapsulation, the packets do not need to be unpacked to derive the forwarding information. In the method described the information needed for forwarding is already provided to the nodes by either providing additional routing rules and determining and/or ensuring IP forwarding is enabled.

Probing according to the method can be performed advantageously from the home gateway but can also be performed from any of the other endpoints within the network. However, because home networks typically allow only limited access from outside to devices inside the network the method is particularly useful for allowing probing of the home network from outside, via the home gateway or other such device which operates as an interface to the network from outside the network. A home network typically interfaces with the wider world of networks, for example the internet, via a home gateway which is typically at least partially under the control of an operator providing network, internet and other services, for example television, to the home network. Since the operator can control the home gateway, it can install probing software on the home gateway and thus probe the home network using the home gateway as probing node. This has the advantage of allowing the operator to gain important information about aspects of the network, for example the bandwidths, that will allow the operator to optimise the operator service provided to that network.

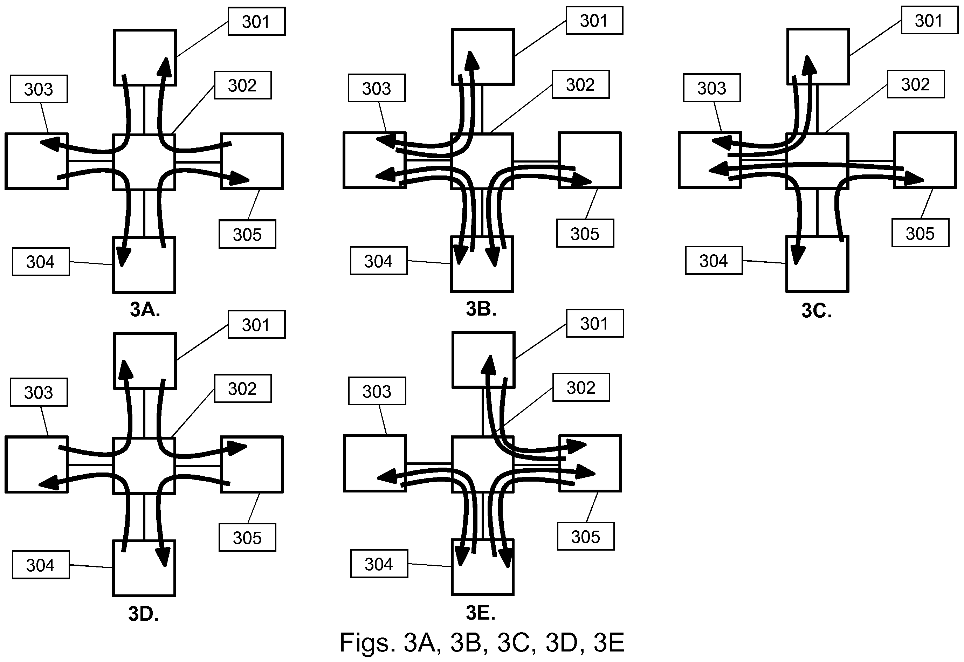

Alternative routes through typical networks may also be envisaged. For example Figure 3 shows further embodiments of the invention as worked in a network comprising a home gateway 301, a switch 302, device A 303, device B 304 and device C 305. These show the extent of the invention, but the invention is not limited to these specific examples.

In embodiment 3A a circular route is used in which a probe packet is sent from the home gateway 301 first via the switch to device A 303, then from device A via the switch to device B 304, then from device B through the switch to device C 305, and finally from device C through the switch back to the home gateway.

In embodiment 3B a similar path to the embodiment of 3A is chosen until the probe arrives at device C 305. The probe is then returned through the same route from device C via device B 304 and device A 303, finally back to the home gateway 301.

In embodiment 3C a similar path to the embodiment of 3A is chosen until the probe arrives at device C 305. The probe is then returned directly to device A 303 through the switch 302 and is then returned to the home gateway 301.

In embodiment 3D shows a path which is essentially opposite in direction to that of embodiment 3A. The probe is sent from the home gateway 301 firstly though the switch 302 to device C 305, then through the switch 302 to device B 304, again through the switch 302 to device A 303 and finally through the switch 302 to the home gateway 301.

In embodiment 3E a similar path to the embodiment of 3D is chosen until the probe arrives at device A 303. The probe is then returned through the same route from device A via device B 304 and device C 305, finally back to the home gateway 301.

Measuring different routes in various ways will give more information, for example on capacity or bandwidth in a certain direction, or for example it may show bottlenecks without having to use traditional TTL approaches, instead just using end-to-end approaches. For example, there can be a link between two network elements which are not on any regular network path from a home gateway, but which is on a network path between two end-points in the home network. If this link is of a much lower speed then the other links in the home network, using an end-to-end probe relayed through this link will discover this bottleneck between the two end-points, without using a per-hop probing method.

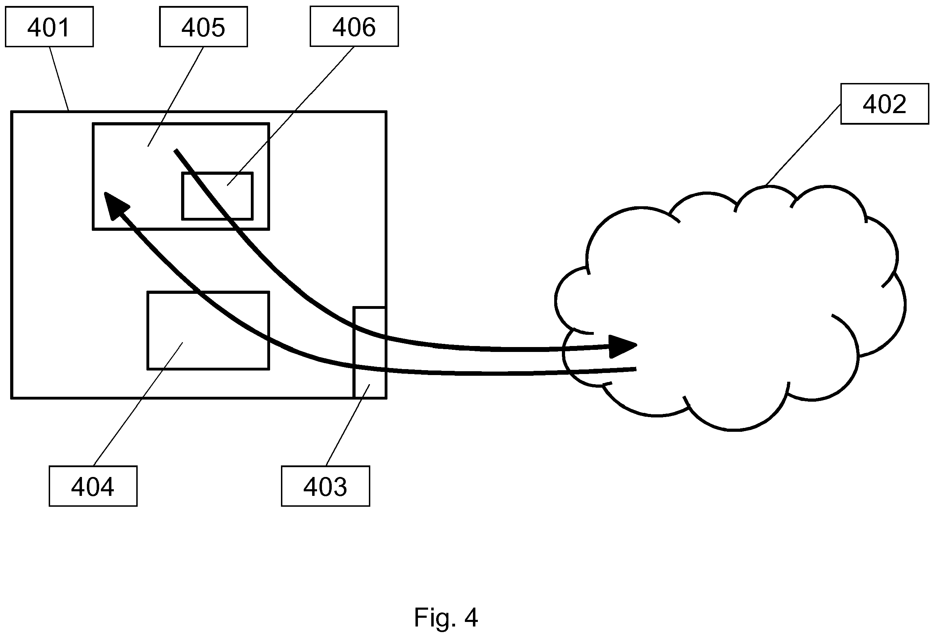

Figure 4 shows an embodiment of the invention.

Node 401 is coupled to network 402 through direct interface connection 403 and comprises routing table 404 which contains the information which controls default routing of all packets which leave node 401. Probe software 405 installed on node 401 comprises routing table 406. Probing software 405 can use direct interface connection 403 for a direct connection to network 402, bypassing default routing table 404 by using its own built-in routing table 406. Probing software 405 can therefore construct its own packets using routing table 406 and send them out directly through direct interface connection 403, but can still receive packets through the system as normal.

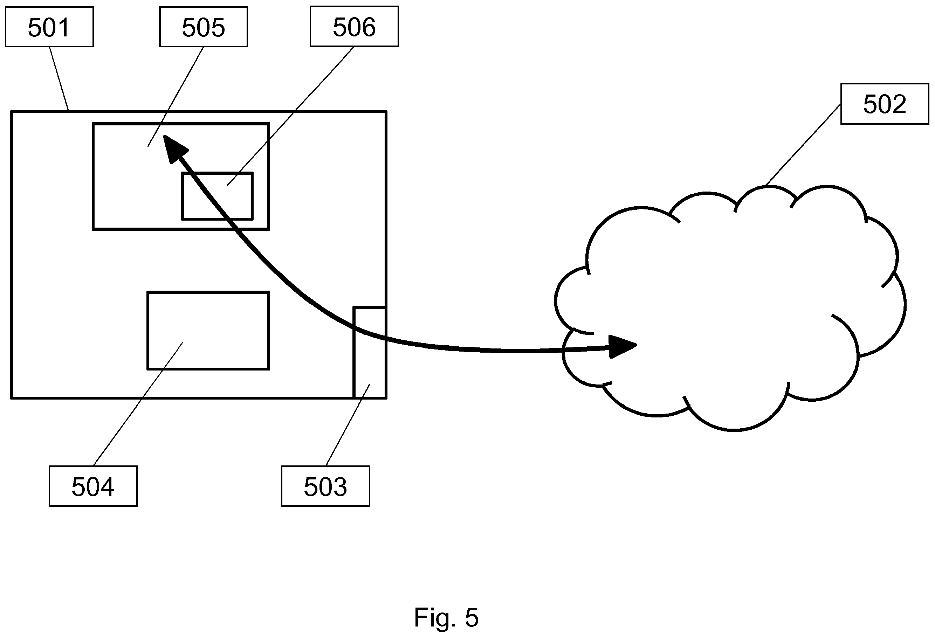

Figure 5 shows an embodiment of the invention.

Node 501 is coupled to network 502 through direct interface connection 503 and comprises routing table 504 which contains the information which controls default routing of all packets which leave node 501. Probe software 505 installed on node 501 comprises routing table 506, thus allowing it to construct its own packets. Node 501 has its own IP address. A second IP address is supplied to the probe software 505 allowing the probing application to use a different IP address from the rest of the system. This can be done by for example using a virtual network interface bridged with the physical network interface, using for example TUN or TAP functions. Packets sent or returned to the probe software 505 can now be sent directly to the probe software instead of being sent via the node 501.

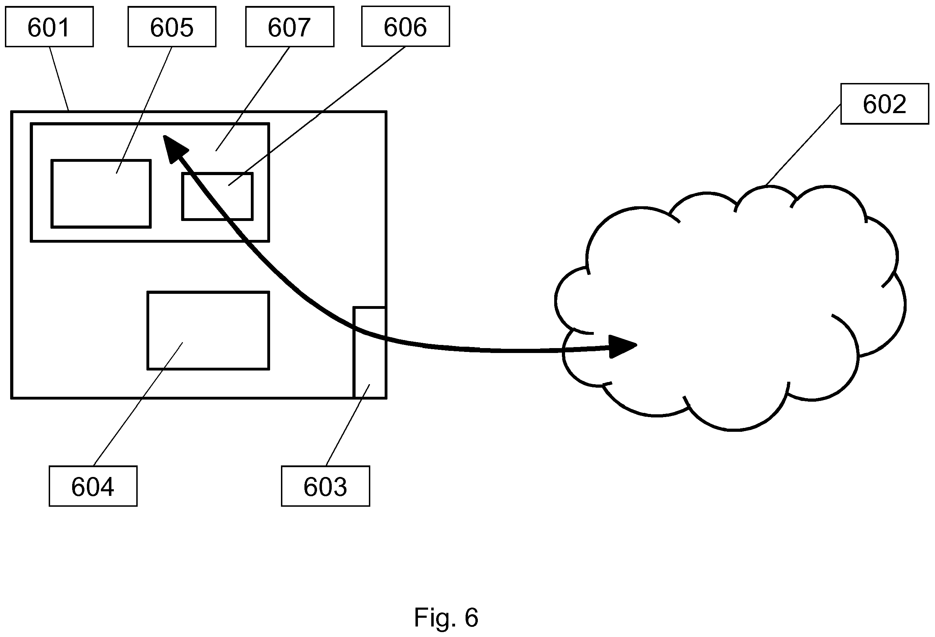

Figure 6 shows an embodiment of the invention.

Node 601 is coupled to network 602 through direct interface connection 603 and comprises routing table 604 which contains the information which controls default routing of all packets which leave node 601. Probe software 605 installed on node 601 is running in a virtual machine 607 which comprises routing table 606, thus allowing the virtual machine to construct its own packets. Virtual machine 607 uses bridge mode to allow it to have its own IP address while running the probing application 605 inside the virtual machine 607. This allows the probing application 605 to use the routing rules comprised in routing table 606 contained in the virtual machine 607.

## Claims

1. A method of probing a network between a probe node (201) and a destination node (203), wherein the network comprises
- a further node (204), wherein the further node is an end point;
- a connection between the probe node (201) and the destination node (203);
- a connection between the probe node (201) and the further node (204);
- and a connection between the further node (204) and the destination node (203);
the method comprising:
- selecting the probe node (201) or the destination node (203) to be a redirecting node, which redirecting node comprises routing rules to be applied to non-probing data traffic, and bypassing the routing rules by accessing further routing rules that are applied to a probe packet (205, 206, 207, 208);
- selecting the further node (204) to be a forwarding node and ensuring packet forwarding at the forwarding node; and
- transmitting the probe packet (205, 206, 207, 208) between the probe node (201) and the destination node (203), wherein the further routing rules cause the probe packet (205, 206, 207, 208) to travel between the probe node (201) and the destination node (203) via the forwarding node.

2. The method according to claim 1 wherein the further routing rules are in a further routing table (406).

3. The method according to any previous claim wherein the transmission of the probe packet (205, 206, 207, 208) is controlled by probe software (505) and the further routing rules are part of the probe software.

4. The method according to claim 3 wherein the probe software (505) comprises its own IP address.

5. The method according to claims 3 or 4 wherein the probe software (605) runs in a virtual machine (607) on the probe node (201).

6. The method according to claim 2 wherein an additional routing table (406) is added to the routing table (404) in the probe node (201).

7. The method according to claim 1 wherein the routing rules are bypassed at the redirecting node so that a probe packet (205, 206, 207, 208) is routed to the forwarding node.

8. The method according to any of the previous claims wherein packet forwarding is IP forwarding.

9. The method according to claim 8 wherein the routing rules are bypassed at the redirecting node so that the IP address of the destination node (203) is used as the IP destination address of the probe packet (205, 206, 207, 208) and the MAC address of the forwarding node is used as the destination MAC address of the probe packet (205, 206, 207, 208).

10. The method of claim 1 where the network includes a residential gateway and the residential gateway is selected as the probe node (201).

11. A network comprising at least first, second and third nodes wherein
- the first node is a probe node (201),
- the second node is a further node (204), wherein the further node is an end point, and
- the third node is a destination node (203), and
wherein there is a connection between the first node and the second node, and between the first node and the third node, and between the second node and the third node, and wherein
- the first node or the third node is selected to be a redirecting node and routing rules to be applied to non-probing data traffic are bypassed at the redirecting node by accessing further routing rules that are applied to a probe packet (205, 206, 207, 208);
- the second node is selected to be a forwarding node and packet forwarding is ensured at the forwarding node; and
the network is arranged to transmit the probe packet (205, 206, 207, 208) between the probe node (201) and the destination node (203), wherein the further routing rules cause the probe packet to travel between the probe node and the destination node via the forwarding node.

12. A network according to claim 11 wherein the probe node (201) is a gateway device and is arranged to couple the network to another network.

13. A redirecting node in a network, the network comprising a probe node, a destination node and a forwarding node, wherein the forwarding node is an end point with enabled packet forwarding, the forwarding node having a connection to the destination node, and the probe node comprising a connection to the forwarding node and to the destination node,
wherein the redirecting node is configured for bypassing routing rules to be applied to non-probing data traffic by accessing further routing rules that are applied to a probe packet transmitted between the probe node and the destination node, wherein the further routing rules cause the probe packet to be routed to the forwarding node, and
wherein the redirecting node is the probe node or the destination node.

14. The redirecting node according to claim 13, wherein the redirecting node is the probe node and is one of a residential gateway or home gateway.

## Patentansprüche

1. Verfahren zum Sondieren eines Netzes zwischen einem Sondenknoten (201) und einem Zielknoten (203), wobei das Netz Folgendes umfasst:
- einen weiteren Knoten (204), wobei der weitere Knoten ein Endpunkt ist;
- eine Verbindung zwischen dem Sondenknoten (201) und dem Zielknoten (203);
- eine Verbindung zwischen dem Sondenknoten (201) und dem weiteren Knoten (204);
- eine Verbindung zwischen dem weiteren Knoten (204) und dem Zielknoten (203);
wobei das Verfahren Folgendes umfasst:
- Auswählen des Sondenknotens (201) oder des Zielknotens (203) als umleitenden Knoten, wobei der umleitende Knoten Routingregeln enthält, die auf nicht sondierenden Datenverkehr anzuwenden sind, und Umgehen der Routingregeln durch Zugreifen auf weitere Routingregeln, die auf ein Sondenpaket (205, 206, 207, 208) angewendet werden;
- Auswählen des weiteren Knotens (204) als weiterleitenden Knoten und Gewährleisten des Weiterleitens von Paketen bei dem weiterleitenden Knoten und
- Senden des Sondenpakets (205, 206, 207, 208) zwischen dem Sondenknoten (201) und dem Zielknoten (203), wobei die weiteren Routingregeln bewirken, dass das Sondenpaket (205, 206, 207, 208) zwischen dem Sondenknoten (201) und dem Zielknoten (203) über den weiterleitenden Knoten läuft.

2. Verfahren nach Anspruch 1, wobei sich die weiteren Routingregeln in einer weiteren Routingtabelle (406) befinden.

3. Verfahren nach einem der vorhergehenden Ansprüche, wobei die Sendung des Sondenpakets (205, 206, 207, 208) durch Sondensoftware (505) gesteuert wird und die weiteren Routingregeln Teil der Sondensoftware sind.

4. Verfahren nach Anspruch 3, wobei die Sondensoftware (505) ihre eigene IP-Adresse enthält.

5. Verfahren nach Anspruch 3 oder 4, wobei die Sondensoftware (605) in einer virtuellen Maschine (607) auf dem Sondenknoten (201) läuft.

6. Verfahren nach Anspruch 2, wobei eine zusätzliche Routingtabelle (406) zu der Routingtabelle (404) in dem Sondenknoten (201) hinzugefügt wird.

7. Verfahren nach Anspruch 1, wobei die Routingregeln an dem umleitenden Knoten so umgangen werden, dass ein Sondenpaket (205, 206, 207, 208) an den weiterleitenden Knoten geleitet wird.

8. Verfahren nach einem der vorhergehenden Ansprüche, wobei die Paketweiterleitung eine IP-Weiterleitung ist.

9. Verfahren nach Anspruch 8, wobei die Routingregeln bei dem umleitenden Knoten so umgangen werden, dass die IP-Adresse des Zielknotens (203) als die IP-Zieladresse des Sondenpakets (205, 206, 207, 208) verwendet wird und die MAC-Adresse des weiterleitenden Knotens als die Ziel-MAC-Adresse des Sondenpakets (205, 206, 207, 208) verwendet wird.

10. Verfahren nach Anspruch 1, wobei das Netz einen "Residential Gateway" umfasst und das "Residential Gateway" als der Sondenknoten (201) gewählt wird.

11. Netz, das mindestens einen ersten, einen zweiten und einen dritten Knoten umfasst, wobei
- der erste Knoten ein Sondenknoten (201) ist,
- der zweite Knoten ein weiterer Knoten (204) ist, wobei der weitere Knoten ein Endpunkt ist, und
- der dritte Knoten ein Zielknoten (203) ist und wobei es eine Verbindung zwischen dem ersten Knoten und dem zweiten Knoten und zwischen dem ersten Knoten und dem dritten Knoten und zwischen dem zweiten Knoten und dem dritten Knoten gibt und wobei
- der erste Knoten oder der dritte Knoten als umleitender Knoten ausgewählt wird und Routingregeln, die auf nicht sondierenden Datenverkehr anzuwenden sind, bei dem umleitenden Knoten umgangen werden, indem auf weitere Routingregeln zugegriffen wird, die auf ein Sondenpaket (205, 206, 207, 208) angewendet werden;
- der zweite Knoten als weiterleitender Knoten ausgewählt wird und eine Paketweiterleitung bei dem weiterleitenden Knoten gewährleistet ist und
das Netz dafür ausgelegt ist, das Sondenpaket (205, 206, 207, 208) zwischen dem Sondenknoten (201) und dem Zielknoten (203) zu senden, wobei die weiteren Routingregeln bewirken, dass das Sondenpaket zwischen dem Sondenknoten und dem Zielknoten über den weiterleitenden Knoten läuft.

12. Netz nach Anspruch 11, wobei der Sondenknoten (201) eine Gateway-Vorrichtung ist und dafür ausgelegt ist, das Netz an ein weiteres Netz zu koppeln.

13. Umleitender Knoten in einem Netz, wobei das Netz einen Sondenknoten, einen Zielknoten und einen weiterleitenden Knoten umfasst, wobei der weiterleitende Knoten ein Endpunkt mit freigeschalteter Paketweiterleitung ist, der weiterleitende Knoten eine Verbindung mit dem Zielknoten aufweist und der Sondenknoten eine Verbindung mit dem weiterleitenden Knoten und dem Zielknoten umfasst,
wobei der umleitende Knoten konfiguriert ist, Routingregeln, die auf nicht sondierenden Datenverkehr anzuwenden sind, zu umgehen, indem auf weitere Routingregeln zugegriffen wird, die auf ein Sondenpaket angewendet werden, das zwischen dem Sondenknoten und dem Zielknoten gesendet wird, wobei die weiteren Routingregeln bewirken, dass das Sondenpaket zu dem weiterleitenden Knoten geleitet wird und wobei der umleitende Knoten der Sondenknoten oder der Zielknoten ist.

14. Umleitender Knoten nach Anspruch 13, wobei der umleitende Knoten der Sondenknoten ist und ein "Residential Gateway" oder ein "Home Gateway" ist.

## Revendications

1. Procédé de sondage d'un réseau entre un nœud de sondage (201) et un nœud de destination (203), où le réseau comprend :
- un autre nœud (204), où l'autre nœud est un point final ;
- une connexion entre le nœud de sondage (201) et le nœud de destination (203) ;
- une connexion entre le nœud de sondage (201) et le nœud supplémentaire (204) ;
- et une connexion entre le nœud supplémentaire (204) et le nœud de destination (203) ;
le procédé comprenant les étapes suivantes :
- sélectionner le nœud de sondage (201) ou le nœud de destination (203) en tant que nœud de redirection, lequel nœud de redirection comprend de router des règles à appliquer à du trafic de réseau non de sondage, et de contourner les règles de routage en accédant à d'autres règles de routage qui sont appliquées à un paquet de sondage (205, 206, 207, 208) ;
- sélectionner le nœud supplémentaire (204) pour être un nœud de réacheminement et assurer le réacheminement de paquets au niveau du nœud de réacheminement ; et
- transmettre le paquet de sondage (205, 206, 207, 208) entre le nœud de sondage (201) et le nœud de destination (203), où les règles de routage supplémentaires amènent le paquet de sondage (205, 206, 207, 208) à se déplacer entre le nœud de sondage (201) et le nœud de destination (203) par l'intermédiaire du nœud de réacheminement.

2. Procédé selon la revendication 1, dans lequel les règles de routage supplémentaires se trouvent dans une autre table de routage (406).

3. Procédé selon l'une quelconque des revendications précédentes dans lequel la transmission du paquet de sondage (205, 206, 207, 208) est commandée par un logiciel de sondage (505) et les règles de routage supplémentaires font partie du logiciel de sondage.

4. Procédé selon la revendication 3, dans lequel le logiciel de sondage (505) comprend sa propre adresse IP.

5. Procédé selon les revendications 3 ou 4, dans lequel le logiciel de sondage (605) fonctionne dans une machine virtuelle (607) sur le nœud de sondage (201).

6. Procédé selon la revendication 2, dans lequel une table de routage supplémentaire (406) est ajoutée à la table de routage (404) dans le nœud de sondage (201).

7. Procédé selon la revendication 1, dans lequel les règles de routage sont contournées au niveau du nœud de redirection de manière à ce qu'un paquet de sondage (205, 206, 207, 208) soit routé vers le nœud de réacheminement.

8. Procédé selon l'une quelconque des revendications précédentes dans laquelle le réacheminement de paquets est un réacheminement IP.

9. Procédé selon la revendication 8, dans lequel les règles de routage sont contournées au niveau du nœud de redirection de manière à ce que l'adresse IP du nœud de destination (203) soit utilisée comme adresse IP de destination du paquet de sondage (205, 206, 207, 208) et l'adresse MAC du nœud de réacheminement soit utilisée comme adresse MAC de destination du paquet de sondage (205, 206, 207, 208).

10. Procédé selon la revendication 1, dans lequel le réseau comprend une passerelle résidentielle et la passerelle résidentielle est sélectionnée comme nœud de sondage (201).

11. Réseau comprenant au moins des premier, deuxième et troisième nœuds où :
- le premier nœud est un nœud de sondage (201),
- le deuxième nœud est un nœud supplémentaire (204), où le nœud supplémentaire est un point final, et
- le troisième nœud est un nœud de destination (203), et
où il y a une connexion entre le premier nœud et le deuxième nœud, et entre le premier nœud et le troisième nœud, et entre le deuxième nœud et le troisième nœud, et où :
- le premier nœud ou le troisième nœud est sélectionné pour être un nœud de redirection, et les règles de routage à appliquer au trafic de données non de sondage sont contournées au niveau du nœud de redirection en accédant à des règles de routage supplémentaires qui sont appliquées à un paquet de sondage (205, 206, 207, 208) ;
- le deuxième nœud est sélectionné pour être un nœud de réacheminement, et le réacheminement de paquets est assuré au niveau du nœud de réacheminement ; et
le réseau est agencé pour transmettre le paquet de sondage (205, 206, 207, 208) entre le nœud de sondage (201) et le nœud de destination (203), où les règles de routage supplémentaires amènent le paquet de sondage à se déplacer entre le nœud de sondage et le nœud de destination par l'intermédiaire du nœud de réacheminement.

12. Réseau selon la revendication 11, dans lequel le nœud de sondage (201) est un dispositif de passerelle et est agencé pour coupler le réseau à un autre réseau.

13. Nœud de redirection dans un réseau, le réseau comprenant un nœud de sondage, un nœud de destination et un nœud de réacheminement, où le nœud de réacheminement est un point final avec réacheminement de paquets activé, le nœud de réacheminement ayant une connexion au nœud de destination, et le nœud de sondage comprenant une connexion au nœud de réacheminement et au nœud de destination,
où le nœud de redirection est configuré pour contourner les règles de routage à appliquer au trafic de données non de sondage en accédant à des règles de routage supplémentaires qui sont appliquées à un paquet de sondage transmis entre le nœud de sondage et le nœud de destination, où les règles de routage supplémentaires amènent le paquet de sondage à être routé vers le nœud de réacheminement, et où le nœud de redirection est le nœud de sondage ou le nœud de destination.

14. Nœud de redirection selon la revendication 13, dans lequel le nœud de redirection est le nœud de sondage et est un nœud parmi une passerelle résidentielle ou une passerelle domestique.
